# FASCICULE DE BREVET EUROPEEN

(11) **EP 1 323 349 B1**
(45) Date de publication et mention de la délivrance du brevet: **18.07.2007**
(21) Numéro de dépôt: 02102895.6
(22) Date de dépôt: 26.12.2002
(51) Int. Cl.: A22C 17/14

(54) **Procédé de fabrication d'enveloppes pour produits de charcuteries, enveloppes et produits de charcuteries ainsi obtenus**
Verfahren zur Herstellung von Hüllen für Wurstwaren, Hüllen und Wurstware so gehüllt
Method for producing casings for sausage products, casings and sausage products so obtained

(30) Priorité: 27.12.2001 FR 0116939
(43) Date de publication de la demande: 02.07.2003
(73) Titulaire: Eurocali, 69570 Dardilly (FR)
(72) Inventeur: Gay, Frédéric, 69570, Dardilly (FR)
(74) Mandataire: Palix, Stéphane

(56) Documents cités:
- BE-A- 393 604
- DE-B- 1 017 453
- DE-C- 697 254
- DE-C- 709 223
- DE-C- 863 291
- FR-A- 642 620
- FR-A- 1 547 382
- GB-A- 325 623
- US-A- 3 744 784
- US-A- 4 006 258

## Description

La présente invention concerne un procédé de fabrication d'enveloppes à base de boyaux naturels destinées à des produits de charcuteries. La présente invention se rapporte également des enveloppes à base de boyaux naturels pour produits de charcuteries. La présente invention concerne encore des produits de charcuteries prévus avec des enveloppes à base de boyaux naturels.

Un produit de charcuterie, par exemple de type saucisse ou saucisson sec, comprend une enveloppe, et dont les deux extrémités sont fermées, et une pâte de viande hachée et assaisonnée embossée à l'intérieur de l'enveloppe et ayant subi, ou pas selon le cas, un processus de maturation par cuisson, dessiccation et/ou fumage à travers l'enveloppe. L'enveloppe poreuse est réalisée en boyau naturel, en boyau naturel reconstitué, en boyau artificiel, de type boyau collagénique, boyau en polyamide, boyau cellulosique, ... Dans la grande majorité des cas, le produit de charcuterie présente une forme allongée et sensiblement cylindrique ou conique, mais toujours rectiligne. L'une de ses deux extrémités est formée soit par l'enveloppe elle-même, soit par une fermeture rapportée formant moyen de ligature. Il est fermé à l'autre de ses extrémités, par exemple au moyen d'une ficelle, d'un clip.

### Etat de la technique

Pour la formation d'enveloppe, on connaît l'utilisation traditionnelle de parties entières de gros intestin du porc, encore appelé chaudin. Le chaudin est dégraissé, découpé en différentes longueurs souhaitées, puis retourné ou non. Une fois fermé aux deux extrémités et rempli avec de la viande, il présente l'avantage d'avoir des formes assez irrégulières, conférant au produit de charcuterie fini un aspect naturel, rustique, pouvant favoriser l'obtention de label de qualité.

Néanmoins, un inconvénient du chaudin est que le produit de charcuterie semi-fini ne va pas sécher de manière uniforme, malgré l'embossage d'un poids constant de viande. Le chaudin est plus ou moins gras, plus ou moins épais en fonction de l'animal de départ, plus ou moins dégraissé, dénervé et calibré en fonction de l'opérateur ou de la machine, ce qui entraîne des variations pour les produits finis. Les produits de charcuterie obtenus ne sont donc pas homogènes. Cela va nécessiter une opération de pesée supplémentaire, ce qui entraîne une perte de temps au moment de l'étiquetage.

On connaît également l'utilisation de l'intestin grêle du porc et/ou de mouton, encore appelé menu de porc et/ou menu de mouton. Le menu est nettoyé puis découpé en différents morceaux plats, par exemple en bandes, qui sont trempées dans de l'eau et assemblées les unes sur les autres en recouvrant totalement un moule rigide, de façon à reconstituer une poche. Selon le diamètre et les dimensions de l'enveloppe et du produit fini que l'on souhaite, on colle ainsi les uns sur les autres entre deux et neuf couches de morceaux du menu. Le moule est en bois, en PVC alimentaire ou autre, éventuellement percé pour faciliter le démoulage par injection d'air comprimé ou encore sans air comprimé pour un moule à surfaces non-adhérentes au collagène animal naturel.

Le document EP- 0.517.630 décrit un procédé de fabrication d'une enveloppe à forme régulière destinée à l'obtention de saucissons. Le procédé consiste à coudre ensemble sur un tube droit formant support rigide deux bandes longitudinales en boyau d'animal.

Le document US- 4.006.258 décrit également un procédé de fabrication d'une enveloppe à forme régulière pour produit de charcuterie sur un mandrin formant moule rigide. Les bandes d'intestin sont collées les unes par rapport aux autres par leurs bords se chevauchant.

On connaît également d'après le document DE- 863.291 un procédé pour fabriquer une enveloppe, à partir de morceaux plats de boyaux positionnés les uns à côté des autres avec chevauchement. Le procédé est mise en oeuvre à l'aide d'un moule pouvant prendre deux configurations différentes.

L'inconvénient principal de ces techniques est que l'enveloppe obtenue présente une forme extrêmement régulière et rectiligne. Ainsi, à l'inverse du chaudin, le produit de charcuterie fini ainsi obtenu avec son aspect non-naturel, n'est pas véritablement attractif pour le consommateur.

### Résumé de l'invention

Le but de l'invention est de proposer un procédé de réalisation d'enveloppes en boyau naturel reconstitué présentant l'aspect initial d'un boyau naturel ou toute autre forme. Un premier problème est de réaliser des enveloppes en boyau naturel ressemblant à du chaudin par reconstitution de la forme et des dimensions du chaudin. Un deuxième problème est de prévoir un procédé avec différentes étapes de fabrication des enveloppes en boyau naturel, qui devront toutes présenter des caractéristiques de dimensions, d'épaisseur et de forme restant constantes au cours du temps. Un troisième problème posé est la mise au point d'un procédé de fabrication comprenant une étape aisée de démoulage d'une enveloppe en boyau naturel présentant une forme particulièrement irrégulière.

Conformément à un premier aspect de l'invention, un procédé de fabrication d'enveloppes en boyau naturel pour produits de charcuterie comprend les étapes consistant :
- à préparer un moule à configuration déformable ayant la forme et les dimensions de l'enveloppe souhaitée,
- à appliquer des morceaux plats de boyaux sur la surface extérieure du moule à configuration déformable, de façon à recouvrir totalement cette surface extérieure et à constituer ladite enveloppe,
- à laisser sécher l'enveloppe obtenue, et
- à faire varier la forme et les dimensions du moule à configuration déformable, afin de démouler et libérer ainsi l'enveloppe.

Le procédé est caractérisé en ce que le moule à configuration déformable et l'enveloppe obtenue présentent une forme irrégulière allongée avec un ou plusieurs renflements et rétrécissements transversaux et/ou longitudinaux.

Dans un premier mode de réalisation, le moule à configuration déformable peut être réalisé en un matériau souple présentant une surface extérieure sur laquelle le collagène animal n'adhère pas totalement, mais suffisamment. Ce moule peut être rempli avec la ou les matières aptes à être aisément vidées. L'étape consistant à faire varier la forme et les dimensions du moule à configuration déformable peut être favorablement réalisée par vidage d'une ou plusieurs matières aptes à être aisément vidées.

A titre d'exemple, le matériau souple peut être un matériau polymère ou copolymère. Ce matériau peut être favorablement choisi seul ou en mélange dans le groupe consistant en polyamides, polychlorures de vinyle, caoutchoucs, polyoléfines, éthylène-vinyl-acétate. Comme exemple encore, on pourra choisir le matériau souple en tissu.

De manière avantageuse, la ou les matières aptes à être aisément vidées peuvent être choisies seules ou en mélange dans le groupe consistant en riz, sable, paille, air, sciure, cailloux, billes de verre, billes de bois, eau, polystyrène expansé, ou autre... Pour plus de rapidité, la ou les matières aptes à être aisément vidées peuvent être de préférence sorties du moule à configuration déformable grâce à une aspiration.

Dans un deuxième mode de réalisation, le moule à configuration déformable peut être articulé entre une configuration déployée et une configuration rétractée et présente une ou plusieurs surfaces extérieures sur laquelle le collagène animal n'adhère pas totalement mais suffisamment. De manière particulièrement avantageuse, les morceaux de boyaux peuvent provenir seuls ou en mélange d'intestins porcins, ovins, bovins et/ou équins.

Conformément à un deuxième aspect de l'invention, des enveloppes en boyau naturel pour produits de charcuterie, présentant une forme irrégulière allongée avec un ou plusieurs renflements et rétrécissements transversaux et/ou longitudinaux, sont caractérisées en ce qu'elles sont fabriquées conformément au procédé décrit ci-dessus.

Conformément à un troisième aspect de l'invention, des produits de charcuterie, réalisés par embossage et présentant une forme irrégulière allongée avec un ou plusieurs renflements et rétrécissements transversaux et/ou longitudinaux, sont caractérisés en ce qu'ils comprennent une enveloppe, présentant une forme irrégulière allongée avec un ou plusieurs renflements et rétrécissements transversaux et/ou longitudinaux et réalisée par la mise en oeuvre du procédé tel que décrit ci-dessus.

### Description des dessins

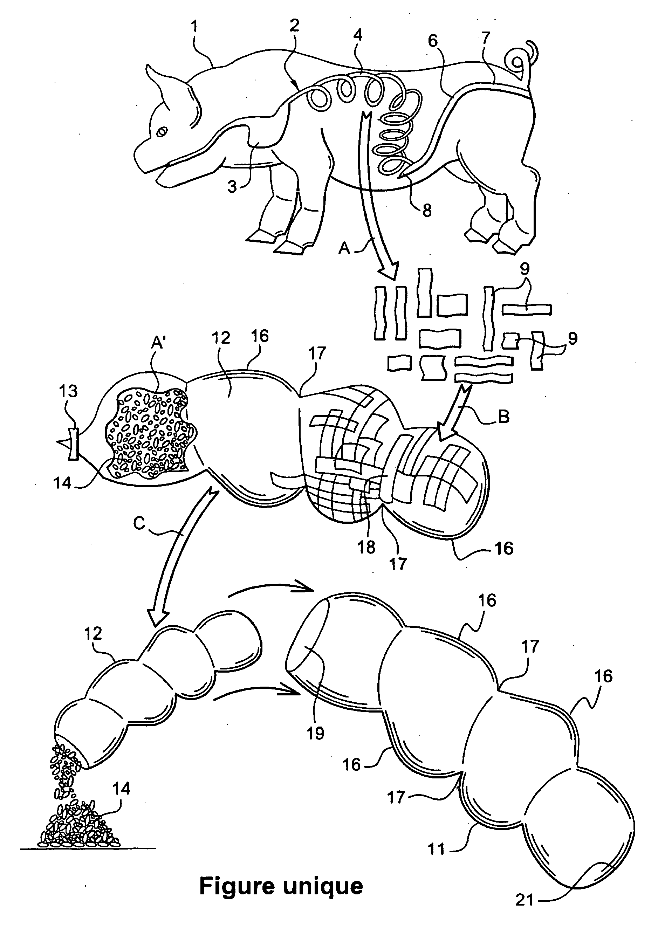

L'invention sera bien comprise et ses divers avantages et différentes caractéristiques ressortiront mieux lors de la description suivante, des exemples non limitatifs de réalisation, en référence au dessin schématique annexé, dans lequel la Figure unique représente une vue synoptique des différentes étapes de fabrication d'une enveloppe pour produit de charcuterie.

### Description détaillée

Lorsqu'un animal de boucherie, tel qu'un cochon (1), est conduit à l'abattoir, on récupère l'ensemble de son appareil digestif (2) et de ses abats pour en valoriser les différents constituants : panse (3), intestin grêle ou menu (4), chaudin (6), fuseau (7), sac (8), ... Par exemple, et selon l'état de la technique, le chaudin (6) est récupéré et sert à la fabrication d'enveloppes pour différents produits de charcuterie.

Dans une première étape de préparation (A) précédant les étapes de la présente invention, environ 20 mètres de menu (4) sont très soigneusement nettoyés par raclage, afin d'en éliminer le contenu, le tissu conjonctif, les nerfs, les veines, ... Le menu (4) est en outre ouvert pour former des lanières, des morceaux (9). On obtient donc de très nombreux morceaux plats de menu (9) présentant des dimensions allant de sensiblement 1 cm à 20 m en longueur et d'environ 80 mm à 155 mm de largeur. Ces morceaux (9) sont ensuite conservés dans de l'eau, du sel ou dans une saumure, afin qu'ils puissent garder toutes leurs qualités, propriétés mécaniques et leur comestibilité.

Dans la première étape du procédé selon la présente invention, on prépare un moule à configuration déformable ayant déjà la forme et les dimensions de l'enveloppe (11) pour produits de charcuterie que l'on souhaite. Ce moule se présente sous la forme d'un sac (12) d'un matériau polymère de type EVA souple. Ce sac (12) est fermé à chacune de ses deux extrémités par deux ligatures (13). En se référant à l'écorché (A') du sac (12) dans la Figure unique, et pour présenter les mêmes dimensions que l'enveloppe finale souhaitée (11), le sac (12) est rempli par des grains de riz (14). Lorsqu'il n'est pas rempli, ce sac (12) peut ainsi aisément se déformer.

La forme particulière et les dimensions du sac (12) formant moule vont faire que l'enveloppe (11) obtenue à partir de ce dernier va présenter sensiblement les mêmes formes et dimensions. Par voie de conséquence, le produit de charcuterie finale avec sa viande embossée dans l'enveloppe (11) va présenter les mêmes formes et dimensions que l'enveloppe (11) et que le sac formant moule (12) utilisé au départ. Le sac formant moule (12) peut ainsi avoir une longueur hors tout sensiblement comprise entre 2 cm et 50 m voire plus, et un diamètre hors tout sensiblement compris entre 20 mm et 50 cm. Les plus grandes longueurs d'enveloppes sont faites sur un seul moule ou par juxtaposition de plusieurs enveloppes de dimensions inférieures.

Le sac formant moule (12) et ainsi l'enveloppe (11) présentent donc à titre d'exemple particulier, la même forme qu'un chaudin (6). Il possède une forme assez irrégulière, allongée et très sensiblement arquée dans le sens longitudinal. En outre, ils ont une succession de renflements (16) et de rétrécissements transversaux (17), analogues à des vagues, plus ou moins marqués. Vu en coupe transversale, le sac formant moule (12) et l'enveloppe ont une section sensiblement ronde, bien que certaines zones puissent être ovales.

Etant donné que l'enveloppe (11) est réalisée en boyau naturel, c'est-à-dire en morceaux de boyau naturel (9), le collage s'effectue à l'aide du collagène d'origine animal naturellement présent dans ces morceaux de menu (9). Ainsi, pour obtenir une enveloppe (11) par moulage puis par démoulage, le sac formant moule (12) correspondant doit présenter une surface extérieure non-adhérente totalement, mais tout de même suffisamment au collagène animal. Ces propriétés de surface sont obtenues avec certains types de matériaux et/ou une certaine rugosité de surface pour éviter l'adhésion des morceaux de menu de porc (9). Le sac formant moule (12) est de qualité alimentaire et conforme aux Règles de Sécurité et d'Hygiène actuellement en vigueur. La surface du sac formant moule (12) est nettoyée, désinfectée.

Ainsi, dans la deuxième étape (B) du procédé de fabrication d'enveloppe (11), les morceaux plats de menu (9) sont appliqués sur toute la surface extérieure du sac formant moule (12). Les morceaux plats (9) sont le cas échéant dessalés puis trempés dans l'eau. Ces morceaux (9) qui présentent tous types de formes, mais principalement allongées ou carrée, sont ainsi positionnés dans tous les sens, longitudinal, transversal, en biais les uns sur les autres, de façon à tapisser et à recouvrir de manière systématique l'ensemble de la surface extérieure du sac formant moule (12). Plusieurs couches, par exemple de 2 à 9 couches sont ainsi superposées, ce qui permet d'obtenir une enveloppe (11) particulièrement résistante. On pourra prévoir des mélanges de morceaux (9) provenant d'espèces animales différentes.

Etant donné que le sac formant moule (12) est complètement rempli avec des grains de riz (14) et présente une surface extérieure particulièrement rigide, ceci facilite d'autant la tâche de pose des morceaux (9) les uns sur et par rapport aux autres. On pourra en outre procéder à un renforcement supplémentaire non obligatoire par un ou plusieurs morceaux de menu supplémentaires (18) en forme de lanières positionnées au niveau des rétrécissements (17) présents sur le moule (12).

Dans un premier cas, les deux extrémités (19 et 21) de l'enveloppe (11) sont laissées ouvertes, pour la pose de deux liens de fermeture. Cependant dans un deuxième cas et pour certains produits de charcuterie, les morceaux de menu (9) seront collés, de façon à fermer totalement en arrondi l'une des deux extrémités. Le sac formant moule (12) correspondant aura également à ce niveau une forme en arrondi régulier.

Dans la troisième étape du procédé selon l'invention, l'enveloppe (11) formée de ces différentes couches de morceaux plats de menu de porc (9) est ensuite séchée directement sur le sac formant moule (12), afin que le collagène fasse l'adhésion entre les différents morceaux de menu (9). La prise, suivie par le durcissement de l'enveloppe (11) se fait ainsi pendant la durée nécessaire variant en fonction de la température, de l'humidité ambiante, du matériel et des installations, ...

La quatrième et dernière étape du procédé permet de libérer l'enveloppe séchée (11) définitivement obtenue. Pour ce faire, l'opérateur va enlever une ligature de fermeture (13) se trouvant à l'une des extrémité du moule (12). Il va ensuite procéder au vidage (étape C) du matériau présent à l'intérieur du moule (12), c'est-à-dire ici les grains de riz (14), de façon à faire diminuer les dimensions et la forme du sac formant moule (12). De cette manière, l'enveloppe formée et séchée (11) va très facilement sortir (étape D) du sac formant moule (12) devenu beaucoup plus petit et totalement flasque.

L'enveloppe (11) peut maintenant subir les processus ultérieurs de fabrication d'un saucisson et peut ainsi être embossée avec de la viande et les ingrédients prévus. Le sac formant moule (11) est ensuite à nouveau rempli avec les grains de riz (14) puis refermé par une ligature (13), de façon à retrouver ses formes et dimensions pour pouvoir resservir à nouveau dans un nouveau processus de fabrication d'une nouvelle enveloppe en boyau (11).

Pour faciliter et/ou pour accélérer le vidage du ou des matériaux (14) se trouvant à l'intérieur du sac formant moule (12), ou pour automatiser le processus, on peut utiliser une aspiration.

D'autres types de moule (12) peuvent être prévus. Toujours dans un souci d'automatisation du procédé de fabrication, un moule pourra être prévu en deux, trois ou quatre pièces différentes qui vont être articulées entre-elles et vont ainsi passer d'une configuration déployée et ayant la forme et les dimensions de l'enveloppe souhaitée (11) à une configuration totalement rétractée, permettant la sortie de l'enveloppe séchée (11). Différents mécanismes d'actionnement pourront être prévus, par exemple du type à air comprimé, à piston, à moyen de rappel du type ressort.

Grâce au procédé selon l'invention, on obtient des produits de charcuterie réalisés à partir d'une enveloppe en boyau naturel (11) présentant une forme relativement naturelle, séduisant le consommateur, et ayant des caractéristiques uniformes de perte d'eau lors du séchage intervenant après l'étape d'embossage de la viande hachée dans l'enveloppe (11). Les enveloppes de plus grandes longueurs, par exemple de l'ordre de plusieurs mètres, seront ligaturées de manière adéquate au fur et à mesure de l'embossage, puis découpées en sous-unités.

On rappellera ci-dessous les utilisations possibles des différentes enveloppes en boyaux selon le procédé conforme à l'invention, ainsi que des différents produits de charcuterie et de saucisserie :
- à partir du gros intestin ou chaudin de porc, du saucisson sec, de l'andouillette ;
- à partir du menu de porc, de la saucisse, de la saucisse fumée, du boudin blanc, du boudin noir, de l'andouillette, du chorizo et différents fromages à trancher ;
- à partir du fuseau de porc, de la rosette, du saucisson sec, de l'andouillette, de la saucisse de Morteau ;
- à partir du sac de porc, du Jésus ;
- à partir de la panse de porc, de l'andouille et de l'andouillette ;
- à partir du menu de boeuf, de l'andouillette, du chorizo, du saucisson de foie, du cervelas et du saucisson cuit ;
- à partir de la baudruche de boeuf, de l'andouille, de la mortadelle, du salami, du boudin, du coppa et différents poissons et viandes fumés ;
- à partir du gros de boeuf, du saucisson sec, du saucisson cuit, de l'andouillette, de l'andouille, du cervelas et du chorizo ;
- à partir du menu de mouton, de la chipolata, de la merguez, de la saucisse de Toulouse, de la saucisse viennoise, de la saucisse de Strasbourg, de la saucisse de Francfort et de la saucisse cocktails ;
- à partir du menu de cheval, de l'andouille de Guéménée, de l'andouille de Vire et du salami.

La présente invention n'est pas limitée aux modes de réalisation décrits et illustrés. De nombreuses modifications peuvent être réalisées, sans pour autant sortir du cadre défini par la portée du jeu de revendications.

Grâce au procédé selon l'invention, toutes les formes et dimensions même les plus singulières pourront être prévues pour le sac formant moule (12), l'enveloppe (11) et pour le produit de charcuterie final.

## Revendications

1. Procédé de fabrication d'enveloppes (11) en boyau naturel pour produits de charcuterie, comprenant les étapes consistant :
- à préparer un moule à configuration déformable (12) ayant la forme et les dimensions de l'enveloppe souhaitée (11),
- à appliquer des morceaux plats de boyaux (9) sur la surface extérieure du moule à configuration déformable (12), de façon à recouvrir totalement cette surface extérieure et à constituer ladite enveloppe (11),
- à laisser sécher l'enveloppe obtenue (11), et
- à faire varier la forme et les dimensions du moule à configuration déformable (12), afin de démouler et libérer ainsi l'enveloppe (11),
**caractérisé en ce que** le moule à configuration déformable (12) et l'enveloppe obtenue (11) présentent une forme irrégulière allongée avec un ou plusieurs renflements (16) et rétrécissements (17) transversaux et/ou longitudinaux.

2. Procédé selon la revendication 1, **caractérisé en ce que** le moule à configuration déformable (12) est réalisé en un matériau souple présentant une surface extérieure sur laquelle le collagène animal n'adhère pas totalement, mais suffisamment, et est rempli avec une ou plusieurs matières (14) aptes à être aisément vidées.

3. Procédé selon la revendication 1 ou 2, **caractérisé en ce que** l'étape consistant à faire varier la forme et les dimensions du moule à configuration déformable (12) est réalisée par vidage d'une ou plusieurs matières (14) aptes à être aisément vidées.

4. Procédé selon la revendication 2 ou 3, **caractérisé en ce que** le matériau souple est un matériau polymère ou copolymère, choisi seul ou en mélange dans le groupe consistant en polyamides, polychlorures de vinyle, caoutchoucs, polyoléfines, éthylène-vinyl-acétate.

5. Procédé selon la revendication 3, **caractérisé en ce que** le matériau souple est un tissu.

6. Procédé selon l'une des revendications 2 à 5, **caractérisé en ce que** la ou les matières aptes à être aisément vidées (14) sont choisies seules ou en mélange dans le groupe consistant en riz, sable, paille, air, sciure, cailloux, billes de verre, billes de bois, eau, polystyrène expansé.

7. Procédé selon la revendication 2 à 6, **caractérisé en ce que** la ou les matières aptes à être aisément vidées (14) sont sorties du moule à configuration déformable (12) par une aspiration.

8. Procédé selon la revendication 1, **caractérisé en ce que** le moule à configuration déformable est articulé entre une configuration déployée et une configuration rétractée et présente une ou plusieurs surfaces extérieures sur laquelle le collagène animal n'adhère pas totalement mais suffisamment.

9. Procédé selon l'une des revendications précédentes, **caractérisé en ce que** les morceaux de boyaux (9) proviennent seuls ou en mélange d'intestins porcins, ovins, bovins et/ou équins.

## Claims

1. A method for producing natural casings (11) for delicatessen products comprising the following stages:
- preparing a mould with a deformable configuration (12) having the shape and the dimensions of the desired casing (11),
- applying flat pieces of intestine (9) to the outer surface of deformable-configuration mould (12) so as to completely cover this outer surface and form said casing (11),
- leaving the casing (11) thus obtained to dry, and
- altering the shape and the dimensions of deformable-configuration mould (12) in order to demould and release casing (11),
**characterised in that** deformable-configuration mould (12) and the casing obtained (11) have an irregular elongated shape with one or more transversal and/or longitudinal bulges (16) and constrictions (17).

2. A method as claimed in claim 1, **characterised in that** deformable-configuration mould (12) is made of a flexible material having an outer surface to which animal collagen adheres sufficiently but does not adhere completely and is filled with one or more materials (14) capable of being easily evacuated.

3. A method as claimed in claim 1 or 2, **characterised in that** the stage involving altering the shape and dimensions of deformable-configuration mould (12) is performed by evacuating one or more materials (14) capable of being evacuated easily.

4. A method as claimed in claim 2 or 3, **characterised in that** the flexible material is a polymer or copolymer selected on its own or as a mixture from the group comprising polyamides, polyvinyl chloride, rubbers, polyolefins, ethylene-vinyl acetate.

5. A method as claimed in claim 3, **characterised in that** the flexible material is a fabric.

6. A method as claimed in any of claims 2 to 5, **characterised in that** the material or materials capable of being easily evacuated (14) is selected on its own or as a mixture from the group comprising rice, sand, straw, air, sawdust, pebbles, glass beads, wooden beads, water, expanded polystyrene.

7. A method as claimed in claims 2 to 6 **characterised in that** the material or materials capable of being easily evacuated (14) is/are removed from deformable-configuration mould (12) by suction.

8. A method as claimed in claim 1, **characterised in that** deformable-configuration mould is articulated between a deployed configuration and a retracted configuration and has one or more outer surfaces to which animal collagen adheres sufficiently but does not adhere completely.

9. A method as claimed in any of the above claims **characterised in that** pieces of intestine (9) are obtained on their own or as a mixture of porcine, ovine, bovine and/or equine casings.

## Patentansprüche

1. Verfahren zur Herstellung von Hüllen (11) aus Naturdarm für Fleisch- und Wurstprodukte, umfassend die Schritte, die darin bestehen, dass
- eine Form (12) mit verformbarer Ausbildung hergestellt wird, die die Form und die Abmessungen der gewünschten Hülle (11) besitzt,
- flache Darmstücke (9) auf die Außenfläche der Form (12) mit verformbarer Ausbildung so aufgelegt werden, dass diese Außenfläche vollständig bedeckt wird und die Hülle (11) gebildet wird,
- man die erhaltene Hülle (11) trocknen lässt und
- man die Form und Abmessungen der Form (12) mit verformbarer Ausbildung sich so ändern lässt, dass die Hülle (11) entformt und auf diese Weise freigegeben wird,
**dadurch gekennzeichnet, dass** die Form (12) mit verformbarer Ausbildung und die erhaltene Hülle (11) eine unregelmäßige langgestreckte Form mit einer oder mehreren Quer- oder Längsverdickungen (16) und -verengungen (17) aufweist.

2. Verfahren nach Anspruch 1, **dadurch gekennzeichnet, dass** die Form (12) mit verformbarer Ausbildung aus einem biegsamen Werkstoff hergestellt wird, der eine Außenfläche besitzt, auf der das tierische Collagen nicht vollständig, aber ausreichend haftet, und mit einem oder mehreren leicht ablassbaren Materialien (14) gefüllt ist.

3. Verfahren nach Anspruch 1 oder 2, **dadurch gekennzeichnet, dass** der Schritt, der darin besteht, dass man die Form und die Abmessungen der Form (12) mit verformbarer Ausbildung sich ändern lässt, durch Ablassen eines oder mehrerer leicht ablassbarer Materialien (14) vorgenommen wird.

4. Verfahren nach Anspruch 2 oder 3, **dadurch gekennzeichnet, dass** der biegsame Werkstoff ein Polymer- oder Copolymermaterial ist, das allein oder in Mischung aus der Gruppe ausgewählt ist, die aus Polyamiden, Polyvinylchloriden, Kautschuks, Polyolefinen, Ethylenvinylacetat besteht.

5. Verfahren nach Anspruch 3, **dadurch gekennzeichnet, dass** der biegsame Werkstoff ein Gewebe ist.

6. Verfahren nach einem der Ansprüche 2 bis 5, **dadurch gekennzeichnet, dass** das oder die leicht ablassbaren Materialien (14) allein oder in Mischung aus der Gruppe ausgewählt sind, die aus Reis, Sand, Stroh, Luft, Sägmehl, Kies, Glaskugeln, Holzkugeln, Wasser, expandiertem Polystyrol besteht.

7. Verfahren nach Anspruch 2 bis 6, **dadurch gekennzeichnet, dass** das oder die leicht ablassbaren Materialien (14) aus der Form (12) mit verformbarer Ausbildung durch eine Absaugung ausgebracht werden.

8. Verfahren nach Anspruch 1, **dadurch gekennzeichnet, dass** die Form mit verformbarer Ausbildung zwischen einer ausgefahrenen Konfiguration und einer eingezogenen Konfiguration verschwenkbar ist und eine oder mehrere Außenflächen aufweist, an denen das tierische Collagen nicht vollständig, aber ausreichend haftet.

9. Verfahren nach einem der vorhergehenden Ansprüche, **dadurch gekennzeichnet, dass** die Darmstücke (9) allein oder in Mischung von Schweine-, Schaf-, Rinder- und/oder Pferdedarm stammen.
